# EUROPEAN PATENT SPECIFICATION

(11) **EP 2 042 296 B1**
(45) Date of publication and mention of the grant of the patent: **23.05.2012**
(21) Application number: 08164764.6
(22) Date of filing: 22.09.2008
(51) Int. Cl.: B29D 30/30, B29C 73/22, B60C 19/12

(54) **Pneumatic tire having built-in sealant layer and preparation thereof**
Luftreifen mit integrierter Dichtungsmassenschicht und Herstellung dieses Reifens
Pneu avec couche d'étanchéité intégrée et sa préparation

(30) Priority: 28.09.2007 US 863994
(43) Date of publication of application: 01.04.2009
(73) Proprietor: The Goodyear Tire & Rubber Company, Akron, OH 44316-0001 (US)
(72) Inventor: Majumdar, Ramendra Nath, Hudson, OH 44236 (US); Puhala, Aaron Scott, Kent, OH 44240 (US)
(74) Representative: Kutsch, Bernd

(56) References cited:
- EP-A- 1 714 802
- EP-A- 1 942 017
- US-A- 4 443 279
- US-B1- 6 508 898

## Description

### Field of the Invention

The present invention is directed to a pneumatic tire having a built-in sealant layer and its preparation.

### Background of the Invention

Various methods, sealants and tire constructions have been suggested for pneumatic tires that relate to use of liquid sealant coatings in which the sealant flows into the puncture hole. However, such liquid sealants can flow excessively at elevated temperatures and cause the tire to become out of balance. Also, the liquid sealant may not be entirely operable or effective over a wide temperature range extending from summer to winter conditions. More complicated tire structures which encase a liquid sealant in a vulcanized rubber material can be expensive to manufacture and can also create balance and suspension problems due to the additional weight required in the tire.

Puncture sealing tires also have been further proposed wherein a sealant layer of degradable rubber is assembled into an unvulcanized tire to provide a built-in sealant. The method of construction, however, is generally only reasonably possible when, for example, the sealant layer is laminated with another non-degraded layer of rubber, e.g., a tire inner liner, which permits handling during the tire building procedure. This is because the degradable rubber tends to be tacky or sticky in nature and lacks strength making it very difficult to handle alone without additional support. The inner liner also keeps the sealant layer from sticking to a tire-building apparatus. By laminating the sealant layer between two or more non-degraded rubber layers, e.g., the tire inner liner and a tire carcass, the sealant layer retains structural integrity during the vulcanization operation wherein high pressures are applied to the tire, which would otherwise displace the degraded rubber layer from its desired location. Accordingly, the resulting puncture sealing tire typically has a sealant layer between the inner liner and tire carcass.
Such a lamination procedure significantly increases the cost of manufacturing a tire. In addition, the compounds in the built-in sealant, e.g., organic peroxide depolymerized butyl rubber, may generate gases at higher temperature, such as during cure or during tire use, which can result in aesthetically unappealing inner liner blister formation. Aside from being unappealing, such blister formation may allow the sealant to unfavorably migrate away from its intended location. To combat blister formation, the inner liner, for example, can be provided at an increased thickness but this can add to the cost of building a tire.

Accordingly, there is a need for a simple and practical method of preparing a self-sealing tire that eliminates or reduces blister formation in the tire inner liner.

EP-A1-1 714 802 describes a pneumatic tire having an adhesive sealant layer. The tire comprises a thermoplastic resin film which bonds with the adhesive sealant layer.

US-A 4,443,279 describes a pneumatic tire, having a co-vulcanized, removable rubber inner liner adhering to the inner surface of the tire.

US-A 6 508 898 describes a soft polyurethane composition usable as self-sealing liner to flat-proof pneumatic tire.

EP-A1-1 942 017 describes a pneumatic tire comprising a tacky sealant layer disposed on the inner side of an inner liner.

### Summary of the Invention

The present invention is directed to a pneumatic tire according to claim 8 having a built-in sealant layer and the method of manufacturing such a tire according to claim 1.

Dependent claims refer to preferred embodiments of the invention.

In one embodiment, a pneumatic tire includes an outer circumferential rubber tread and a supporting carcass. A rubber inner liner is disposed inwardly from the supporting carcass. A built-in sealant layer is situated adjacent to an innermost removable barrier layer. The sealant layer provides self-sealing properties to the pneumatic tire. The tire, with its innermost removable barrier layer, keeps the precursor sealant layer from sticking to a tire-building apparatus and, after curing of an assembled tire, is removed to permit gas from the built-in sealant layer to become part of the tire's inflation air, such as when the tire is at its running temperature, to prevent or reduce instances of inner liner blister formation.

The pneumatic tire, in one embodiment, can be prepared by positioning a removable barrier layer on a tire-building apparatus. Next, a precursor sealant layer is positioned directly on the removable barrier layer. A rubber inner liner is disposed outwardly of the precursor sealant layer followed by a tire carcass then a rubber tire tread on the tire carcass to define an unvulcanized tire assembly. The unvulcanized tire assembly can be vulcanized under conditions of heat and pressure such that the precursor sealant layer provides the pneumatic tire with a built-in sealant layer with self-sealing properties. Then, the removable barrier layer is eventually removed from the pneumatic tire, after curing thereof, to expose the built-in sealant layer.

In another embodiment, a method of preparing a pneumatic tire includes positioning a thermoformable film of polymeric material on a tire-building apparatus. Next, a precursor sealant layer is positioned directly on the thermoformable film. The precursor sealant layer can include an uncured butyl rubber-based rubber composition or a polyurethane based composition. A rubber inner liner is positioned directly on the precursor sealant layer followed by a tire carcass then a rubber tire tread on the tire carcass to define an unvulcanized tire assembly. The precursor sealant layer provides the pneumatic tire with a built-in sealant layer with self-sealing properties after vulcanization. To that end, the unvulcanized tire assembly can be vulcanized under conditions of heat and pressure such that the precursor sealant layer provides the pneumatic tire with the built-in sealant layer with self-sealing properties. Then, the removable barrier layer can be removed from the pneumatic tire, after curing thereof, to expose the sealant layer.

By virtue of the foregoing, there is provided a pneumatic tire that has an ability to seal against various puncturing objects and can eliminate or reduce inner liner blister formation in the tire, for example.

### Brief Description of the Drawings

The accompanying drawings, which are incorporated in and constitute a part of this specification, illustrate embodiments of the invention and, together with the general description of the invention given above, and detailed description given below, serve to explain the invention.

Fig. 1 is a cross-sectional view of a pneumatic tire in accordance with one embodiment of the present invention; and

Fig. 2 is a cross-sectional view partially broken away of an unvulcanized tire assembly prepared in accordance with one embodiment of the present invention; and

Fig. 3 is a perspective view of the pneumatic tire shown in Fig. 1 with a removable barrier layer being removed from the rubber inner liner of the tire.

### Detailed Description

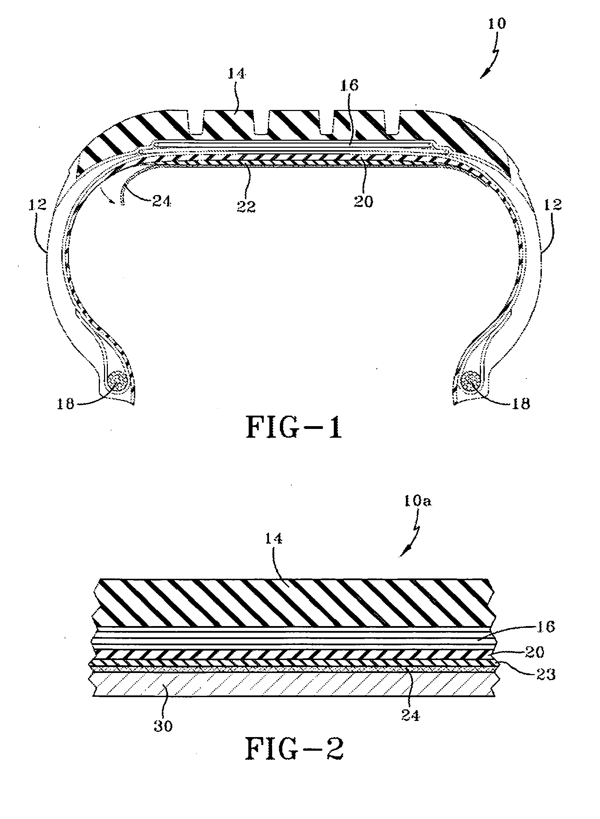

Fig. 1 shows a pneumatic tire 10 that has an ability to seal against various puncturing objects and has the ability to eliminate or reduce blister formation in the tire 10, particularly inner liner blister formation. The tire 10 includes sidewalls 12, an outer circumferential rubber tread (or tread portion) 14, a supporting carcass 16, inextensible beads 18, a rubber inner liner (or air barrier layer) 20, a built-in sealant layer 22, and an innermost removable barrier layer 24. The individual sidewalls 12 extend radially inward from the axial outer edges of the tread portion 14 to join the respective inextensible beads 18. The supporting carcass 16 acts as a supporting structure for the tread portion 14 and sidewalls 12. The rubber inner liner 20 is disposed inwardly from the supporting carcass 16. The sealant layer 22 is adjacent the innermost removable barrier layer 24 and disposed inwardly from the rubber inner liner 20. The outer circumferential tread 14 is adapted to be ground contacting when the tire 10 is in use.

The built-in sealant layer 22, prior to vulcanization of the pneumatic tire 10, is referred to herein as a precursor sealant layer 23. The precursor sealant layer 23 can generally include any non-flowing sealant material known in the art, and is discussed below.

The innermost removable barrier layer 24 of the tire 10 defines a thermoformable film of polymeric material. Such thermoformable film is conforming, has essentially no memory, and is non-elastomeric. Furthermore, the barrier layer 24 must not melt at cure temperatures. In one example, the barrier layer 24 includes a thermoformable film of nylon or blend of nylon and rubber. Examples of nylons which may be formed into film are linear polycondensates of lactams of 6 to 12 carbon atoms and conventional polycondensates of diamines and dicarboxylic acids, e.g. nylon 6,6; nylon 6,8; nylon 6,9; nylon 6,10; nylon 6,12; nylon 8,8 and nylon 12,12. Further examples include nylon 6, nylon 11 and nylon 12, which are manufactured from the corresponding lactams. Suitable nylon thermoformable films include Dartek^{™} films available from DuPont of Wilmington, Delaware. In addition, the polymeric material of the thermoformable films may include polycondensates of aromatic dicarboxylic acids, e.g., isophthalic acid or terephthalic acid, with diamines, e.g., hexamethylenediamine, or octamethylenediamine, polycarbonates of aliphatic starting materials, e.g., m- and p-xylylenediamines, with adipic acid, suberic acid and sebacic acid, and polycondensates based on alicyclic starting materials, e.g. cyclohexanedicarboxylic acid, cyclohexanediacetic acid, 4,4'-diaminodicyclohexylmethane and 4,4'-diaminodicyclohexylpropane. The rubber used in the blend may include a natural and/or synthetic rubber. In one example, the rubber includes butyl rubber, styrene butadiene rubber, and/or natural rubber.

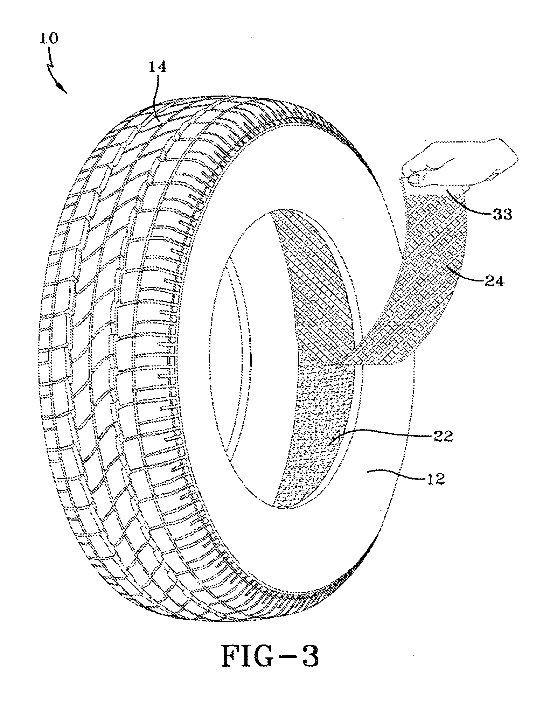

As further discussed below, the barrier layer 24 keeps the precursor sealant layer 23 from sticking to a tire-building apparatus 30 and, after curing of an assembled tire 10a (See Fig. 2), can be removed to permit gas from the resulting built-in sealant layer 22 to escape thus eliminating or reducing inner liner blister formation. Removal of the barrier layer 24 also helps the sealant layer 22 to flow and thereby seal resulting punctures that the tire 10 may encounter. The barrier layer 24, which is substantially inextensible at ambient temperature, is removable without tearing into pieces from the protected surface of the tire 10. To be manually readily removable, the barrier layer 24 does not fuse to itself when overlapped and heated to tire cure temperature. One end of the barrier layer 24 may be overlapped over the other (which other end is adjacent the precursor sealant layer 23) so as to form a pull-tab 33 (See Fig. 3) for easy removal from the resulting built-in sealant layer 22. Also, to facilitate visual detection, the pull-tab 33 may be colored.

With respect to the precursor sealant layer 23, the precursor sealant layer 23 can generally include any non-flowing sealant material known in the art.

In one embodiment, the precursor sealant layer 23 can include a self-healing polyurethane composition. In one example, such polyurethane composition may define a non-flowing, or non-liquid, polyurethane composition that is neither gel-like nor substantially tacky and that provides a self-supporting precursor sealant layer 23. Concerning self-supporting, the polyurethane composition of the precursor sealant layer 23 maintains its own form, e.g., as a sheet or layer, without the need to be laminated to one or more supporting structures. The polyurethane composition is substantially non-tacky in that a sheet of the polyurethane composition, for example, may contact another sheet yet be pulled apart with relative ease and still substantially maintain its original form. The non-flowing polyurethane composition can include a self-healing polyurethane elastomeric material, which may contain, for example, methylene diphenyl 4,4'-diisocyanate (MDI) and poly(alkylene oxide) glycol. Such suitable polyurethane composition for use as the precursor sealant layer 23 may be obtained from Novex of Wadsworth, OH. In another example, the self-healing polyurethane composition is gel-like and tacky. One such suitable polyurethane composition is Tyrlyner^{®} available from VITA Industrial Inc. of Thomasville, Georgia. It should be understood that formulations of urethane materials that can be used for the self-healing polyurethane composition may be readily produced by persons having ordinary skill in the art from known chemistry techniques in the production of urethanes.

After vulcanization, the polyurethane composition provides a gel-like and tacky polyurethane composition, such as by way of thermal degradation, which provides the pneumatic tire 10 with self-sealing properties and defines the built-in sealant layer 22.

In another example, the precursor sealant layer 23 can include an uncured butyl rubber-based rubber composition. One such suitable uncured butyl rubber-based rubber composition is disclosed in US-B- 6,962,181.

In one embodiment, the uncured butyl rubber-based rubber composition may include a peroxide and a dispersion therein of a particulate precured rubber selected from the resin-cured butyl rubber. In one example, based upon parts by weight per 100 parts by weight of said butyl rubber, the butyl rubber-based rubber composition can include a copolymer of isobutylene and isoprene, wherein the copolymer contains from 0.5 units to 5 units derived from isoprene, and correspondingly from 95 weight percent to 99.5 weight percent units derived from isobutylene. The butyl rubber that can be employed may typically have a number average molecular weight, for example, in the range of 200,000 to 500,000. Such butyl rubber and its preparation is well known to those having skill in such art.

The uncured butyl rubber composition further includes a sufficient amount of organoperoxide to cause the butyl rubber to partially depolymerize, usually in a range of from 0.5 to 10 phr of the active organoperoxide depending somewhat upon the time and temperature of the tire curing operation and the degree of depolymerization desired.

Various organoperoxides may be used such as those that become active (e.g. generate peroxide free radicals) at high temperatures, that is, above 100°C. Such organoperoxides are referred to herein as active peroxides. Examples of such organoperoxides are, for example, tert-butyl perbenzoate and dialkyl peroxides with the same or different radicals, such as dialkylbenzene peroxides and alkyl pre-esters. In one example, the active organoperoxide will contain two peroxide groups. In another example, the peroxide groups are attached to a tertiary butyl group. The basic moiety on which the two peroxide groups are suspended can be aliphatic, cycloaliphatic, or aromatic radicals. Some representative examples of such active organoperoxides are, for example, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy)hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy)hexane. Other suitable organoperoxides may be found in P.R. Dluzneski, "Peroxide vulcanization of elastomers", Rubber Chemistry and Technology, Vol. 74, 451 (2001).

The peroxide can be added to the uncured butyl rubber composition in pure form (100 percent active peroxide) or on an inert, free-flowing mineral carrier. Silicon oil is an inert mineral carrier often utilized for this purpose. Such carrier composition containing from 35 weight percent to 60 weight percent active ingredient (peroxide) can be employed. For example, 40 percent by weight dicumylperoxide on an inert carrier can be employed as the peroxide vulcanizing agent in the butyl rubber composition layer.

The uncured butyl rubber-based rubber composition may further include particulate filler including 5 phr to 90 phr of at least one of rubber reinforcing carbon black and coal dust, or mixtures thereof, and, optionally from zero phr to 6 phr, alternatively from 1 to 5 phr, of short fibers, and/or from zero phr to 20 phr, alternatively from 3 to 15 phr, of hollow glass microspheres. It is also to be understood that other known fillers and/or reinforcing agents, such as silica and calcium carbonate, can be substituted for part of the carbon black in this composition.

For the carbon black, various particulate rubber reinforcing carbon blacks are, for example, carbon black referenced in The Vanderbilt Rubber Handbook, 1978, Pages 408 through 417, which are characterized by iodine adsorption (ASTM D1510) and dibutylphthalate absorption (ASTM D 2414) values which are prepared by deposition from a vapor phase at very high temperatures as a result of thermal decomposition of hydrocarbons, rather than a carbonization of organic substances. Such carbon black may have an Iodine adsorption value ranging from 20 mg/g to 270 mg/g and a dibutylphthalate absorption value ranging from 60 cc/100 gms to 180 cc/100 gms. Such carbon black is composed of aggregates of elemental carbon particles of colloidal dimensions, which have a high surface area.

Coal dust, or coal fines, is carbonaceous dust from naturally occurring coal. Coal dust is of significantly greater size than rubber reinforcing carbon black, is not rubber reinforcing in the sense of rubber reinforcing carbon black, and represents a significantly lower cost filler than rubber reinforcing carbon black. The coal dust can be used in greater quantities (concentration) in the butyl rubber composition without significantly adversely affecting the processing of the composition, yet being beneficial to aid in the efficiency of the puncture sealing ability of the resultant built-in sealant layer 22. Further, the coal dust is considered herein useful in promoting adjustment of the storage modulus (G') property of the sealant.

The short fibers may be selected from, for example, cotton fibers and from synthetic fibers selected from rayon, aramid, nylon and polyester fibers, or mixtures thereof. Such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to promote adjustment of a G' property of the sealant composition as well as, in relatively low concentrations, not significantly interfering with the processing of the sealant precursor composition and enhancing the efficiency of the resultant built-in sealant layer 22 and its puncture sealing ability.

Representative of the hollow glass microspheres are, for example, Scotchlite Glass Bubbles^{™} (S60/10000 series), having an average spherical diameter of about 30 microns, from the 3M Company. The hollow glass microspheres are considered herein to promote adjustment of a G' property of the sealant composition as well as enhancing the puncture sealing efficiency and capability of the built-in sealant and, in relatively low concentrations, not significantly adversely affecting the processing of the sealant precursor composition.

The uncured butyl rubber-based rubber composition may further include from zero phr to 20 phr of rubber processing oil, such as one having a maximum aromatic content of 15 weight percent with a naphthenic content in a range of from 35 weight percent to 45 weight percent and a paraffinic content in a range of 45 weight percent to 55 weight percent.

The various rubber processing oils are known to those having skill in such art. In one example, the rubber processing oil has a low aromaticity content, such as less than 15 weight percent. Such a rubber processing oil may be composed of, for example, 35 weight percent to 45 weight percent naphthenic content, 45 weight percent to 55 weight percent paraffinic content, and an aromatic content of less than 15 weight percent (e.g. from 10 to 14 weight percent). It is considered herein that a representative of such rubber processing oil is Flexon 641^{™} from the ExxonMobil company.

The uncured butyl rubber-based rubber composition may further include from zero phr to 10 phr, alternatively 1 to 8 phr, of liquid conjugated diene-based polymer having a weight average molecular weight of less than 80,000 provided however, where the particulate filler is exclusively rubber reinforcing carbon black, the partial composition contains at least 1 phr of liquid diene-based polymer.

The liquid conjugated diene-based liquid polymer may be, for example, a liquid cis 1,4-polyisoprene polymer and/or liquid cis 1,4-polybutadiene polymer. It is to be appreciated that such liquid polymers for the butyl rubber precursor composition are therefore polymers that contain olefinic unsaturation and therefore are not intended to include polyisobutylene that does not contain olefinic unsaturation. A commercial liquid cis 1,4-polyisoprene polymer may be, for example, LIR 50^{™} from the Kuraray Company of Osaki, Japan. A liquid cis 1,4-polybutadiene polymer (absorbed on a particulate filler) may be, for example, Karasol PS-01^{™} from the Drobny Polymer Association.

It is considered herein that the liquid polyisoprene polymer in the butyl rubber acts to aid in regulating the storage modulus G' of the partially depolymerized butyl rubber. For example, addition of the liquid polyisoprene polymer has been observed to provide the partially depolymerized butyl rubber composition with a somewhat increased loss modulus G' which may be desirable for some applications.

In one example, the uncured butyl based composition can include 100 parts of a butyl rubber copolymer, 10 to 40 parts of carbon black, 5 to 35 parts of polyisobutylene, 5 to 35 parts of an oil extender, 0 to 1 part of sulfur, and from 1 to 15 parts of a peroxide vulcanizing agent.

The polyurethane compositions for use in the resulting sealant layer 22 (and precursor sealant layer 23) may further include one or more of the additional components as discussed above, such as reinforcing filler, e.g., carbon black, silica, coal dust, fibers, microspheres, processing oil, etc. It should be understood by one having ordinary skill in the art that additional components may be included in the sealant layer 22 as desired, such as antidegradants, accelerators, etc., in conventional amounts.

The resulting built-in sealant layer 22 (and precursor sealant layer 23) may further include a colorant to provide a non-black colored built-in sealant layer having the capability of visibly identifying a puncture wound. That puncture wound may extend through a black colored rubber inner liner layer, black colored rubber tire tread, and/or black colored sidewall layer to the built-in sealant layer by a physical flow of a portion of the non-black colored built-in sealant layer through the puncture wound to form a contrastingly non-black colored sealant on a visible surface of the black colored inner liner, tread, or sidewall.

The colorant may include titanium dioxide. For example, the colorant of the sealant layer 22 may be titanium dioxide where a white colored sealant layer is desired. Also, such colorant may include titanium dioxide as a color brightener together with at least one non-black organic pigment and/or non-black inorganic pigment or dye. Various colorants may be used to provide a non-black color to the sealant layer 22. Representative of such colorants are, for example, yellow colored colorants as Diarylide Yellow^{™} pigment from PolyOne Corporation and Akrosperse E-6837^{™} yellow EPMB pigment masterbatch with an EPR (ethylene/propylene rubber) from the Akrochem Company.

The various components of the precursor sealant layer 23, prior to building the tire 10, can be mixed together using conventional rubber mixing equipment, particularly an internal rubber mixer. The butyl rubber and polyurethane composition used in the sealant layer 22 generally has sufficient viscosity and enough unvulcanized tack to enable its incorporation into an unvulcanized tire without substantially departing from standard tire building techniques and without the use of complicated, expensive tire building equipment.

Material permitting, the precursor sealant layer 23, prior to building of the tire 10, may be formed into sheet stock that can be cut into strips and then positioned on a tire building apparatus 30, such as a tire drum, during the tire build-up process. The tire building process is described in detail further below.

The rubber tire inner liner 20 may be any known rubber inner liner for use in pneumatic tires 10. In one example, the rubber inner liner 20 can be a sulfur curative-containing halobutyl rubber composition of a halobutyl rubber such as for example chlorobutyl rubber or bromobutyl rubber. Such halobutyl rubber based inner liner layer may also contain one or more sulfur curable diene-based elastomers such as, for example, cis 1,4-polyisoprene natural rubber, cis 1,4-polybutadiene rubber and styrene/butadiene rubber, or mixtures thereof. The inner liner 20 is normally prepared by conventional calendering or milling techniques to form a strip of uncured compounded rubber of appropriate width. When the tire 10 is cured, the inner liner 20 becomes an integral, co-cured, part of the tire 10.

The tire carcass 16 generally may be any conventional tire carcass for use in pneumatic tires 10. Generally, the tire carcass 16 includes one or more layers of plies and/or cords to act as a supporting structure for the tread portion 14 and sidewalls 12. The remainder of the tire components, e.g., tire tread 14, sidewalls 12, and reinforcing beads 18, also generally may be selected from those conventionally known in the art.

The pneumatic tire of Fig. 1 may be prepared, as best shown in Fig. 2, by building sealant layer 22 into an uncured tire 10a using tire drum 30 and conventional tire building techniques. More specifically, the innermost removable barrier layer 24, e.g., nylon, is first situated or positioned on the tire drum 30, with the remainder of the uncured tire 10a being subsequently built thereon. Generally, the barrier layer 24 is wrapped around the drum 30 so that one end of the barrier layer 24 slightly overlaps the other end to define pull tab 33 to allow for easy removal of the barrier layer 24 after tire cure, as shown in Fig. 3.

With further reference to Fig. 2, the precursor sealant layer 23 is positioned directly on the removable barrier layer 24. For example, the butyl rubber based composition or polyurethane composition can be formed into a strip or layer of unvulcanized rubber, by using conventional equipment such as a calender, extruder, or any combination thereof. The thickness of the strip can vary in the unvulcanized tire. Generally, the thickness may range from 0.13 cm (0.05 inches) to 1.9 cm (0.75 inches), alternatively 0.25 to 0.85 cm. In passenger tires, the precursor sealant layer 23 may have a thickness of 0.33 cm (0.125 inches) whereas for truck tires, the precursor sealant layer 23 may have a thickness of 0.76 cm (0.3 inches). The built-in sealant layer 22 is generally situated in the crown region of the tire 10, and may include colorant so that it is of a non-black color that may contrast with the black colored inner liner, tread, or sidewall so that a tire puncture can be noticed.

The rubber inner liner 20 is then positioned on the precursor sealant layer 23, which is followed by the tire carcass 16. Finally, the rubber tire tread 14 is positioned on the tire carcass 16 thereby defining unvulcanized tire assembly 10a.

After the unvulcanized pneumatic tire 10a is assembled, the tire 10a is shaped and cured using a normal tire cure cycle. After curing, the composition of the precursor sealant layer 23 is gel-like and tacky which provides the pneumatic tire 10 with self-sealing properties and defines the built-in sealant layer 22.

Generally, the tire 10a can be cured over a wide temperature range. For example, passenger tires might be cured at a temperature ranging from 130°C to 170°C and truck tires might be cured at a temperature ranging from 150°C to 180°C. In one example, the tire assembly 10a is cured in a suitable mold at a temperature in a range of from 150°C to 175°C for a sufficient period of time such as to partially depolymerize the butyl rubber or thermally degrade non-flowing polyurethane that is neither gel-like nor substantially tacky, for example, thereby forming the built-in sealant layer 22 which has puncture sealing properties.

After curing, the removable barrier layer 24 is attached to the built-in sealant 22. Such barrier layer 24 can be removed from the pneumatic tire 10 to expose the sealant layer 22 to allow for sealing of resulting punctures that the tire 10 may encounter. In one example, as shown in Fig. 3, the barrier layer 24 may be removed by grabbing the pull-tab 33 then pulling to remove from the sealant layer 22. The barrier layer 24, which is substantially inextensible at ambient temperature, is removable without tearing into pieces.

Examples of test pieces of the pneumatic tire 10 with built-in sealant 22 in accordance with the detailed description are now disclosed below.

Three pneumatic tire test pieces were prepared for testing. Each test piece is described below.

### Test Piece No. 1

The following layers were assembled one on top of the other:
7"x7" calendared tread of thickness 0.1 "
4"x4" wire of thickness 0.068"
7"x7" belt (aligned with the wire) of thickness 0.026"
7"x7" inner liner compound of thickness 0.03"
4"x4" butyl based precursor sealant layer of thickness 0.25"
undrawn Dartek^{™} C917 thermoformable nylon film of thickness 2 mil
The above laminated test piece was cured for 35 minutes at 150°C and 200 psi. The thermoformable nylon film was left in place after cure.

### Test Piece No. 2

The following layers were assembled one on top of the other:
7"x7" calendared tread of thickness 0.1 "
4"x4" wire of thickness 0.068"
7"x7" belt (aligned with the wire) of thickness 0.026"
7"x7" inner liner compound of thickness 0.03"
4"x4" butyl based precursor sealant layer of thickness 0.25"
undrawn Dartek^{™} C917 thermoformable nylon film of thickness 2 mil
The above laminated test piece was cured for 35 minutes at 150°C and 200 psi. The thermoformable nylon film was removed after cure.

### Control test piece

The following layers were assembled one on top of the other:
6"x6" calendared tread of thickness 0.1 "
4"x4" wire of thickness 0.068"
6"x6" belt (aligned with the wire) of thickness 0.026"
4"x4" butyl based precursor sealant layer of thickness 0.25"
7"x7" inner liner compound of thickness 0.03" The above laminated test piece was cured for 35 minutes at 150°C and 200 psi.
   Concerning test piece nos. 1 and 2, the Dartek^{™} films were obtained from DuPont of Ontario, Canada. The butyl based composition used for the sealant layer in test piece nos. 1 and 2, and in the control is set forth below in Table I. The composition was prepared in a two-step process with the butyl rubber and the specified ingredients being mixed in a first non-productive step. In a second step, peroxide was mixed into the butyl rubber mixture.

**TABLE I: Composition of Butyl Based Sealant**

| **Component** | **Stage** | **Amount (phr)** |
|---|---|---|
| Butyl rubber | Non-productive 1(NP1) | 100.00 |
| Medium processing oil | NP1 | 3.00 |
| Silica | NP1 | 20.00 |
| Clay | NP1 | 10.00 |
| Titanium dioxide | NP1 | 2.0 |
| Dusting agent | NP1 | 0.5 |
| Yellow pigment¹ | NP1 | 1.00 |
| | | |
| NP1 | Productive | 136.5 |
| Peroxide² (40%) | Productive | 12.00 |
| Total | | 148.50 |

| | | |
|---|---|---|
| ¹ Yellow pigment, Akrochem E-6837 ² Link-Cup® NBV40C available from GEO Specialty Chemicals of Gibbstown, NJ; chemical name: n-butyl-4,4-di(tert-butylperoxy)valerate, 40% supported on calcium carbonate | | |

The cured test pieces were tested to evaluate puncture sealing effectiveness. In the testing process, each test piece was secured lengthwise across an open chamber of a box, which defined a benchtop nail hole tester, to generally seal the opening to the chamber. Test piece nos. 1 and 2 were situated so that the innermost removable barrier layer faced the open chamber and the tire tread faced outwardly. The control was situated so that the inner liner faced the open chamber and the tire tread faced outwardly. In the chamber, air pressure could be established via an inlet valve, maintained, and monitored to simulate a pressurized pneumatic tire. A nail was used to manually puncture the test piece. Each test piece was subjected to puncturing by nails of varying and increasing diameter to evaluate air pressure loss after nail insertion, removal, and reinflation (if needed). Air pressure readings at each step were taken after a two-minute period. The results of the puncture sealing testing are set out in Table II below.

**Table II: Test Results**

| | 1 | 2 | Control |
|---|---|---|---|
| Initial psi = 35 After 0.136" diameter nail insertion | 35 | 35 | 35 |
| After nail removal | 24 | 17 | 15 |
| Re-inflation to 35 psi | 0 | 35 | 35 |
| Initial psi = 35 After 0.0165" diameter nail insertion | 35 | 35 | 35 |
| After nail removal | 0 | 8 | 8 |
| Re-inflation to 35 psi | 0 | 35 | 35 |

Based upon the test results, the puncture sealing properties of test piece no. 2 is at least as good as the control. Specifically, the test results showed that test piece no. 2 and the control could seal nail holes by maintaining air pressure after reinflation after being punctured by a nail 0.136" and 0.165" in diameter. In contrast, test piece no. 1 could not maintain air pressure after reinflation after being punctured by the nail 0.136" in diameter. In addition, test piece no. 1 could not seal during reinflation because the sealant layer could not flow into the puncture in the presence of the non-removed thermoformable film.

Test piece no. 2 and the control were also placed in an oven at 150°C for 15 minutes to test for blister formation. Each test piece was then removed from the oven and visually observed. Blister formation was not detected in test piece no. 2. However, the control showed heavy blister formation in the innermost inner liner. This suggested that volatile material formed from thermal degradation of the butyl rubber based sealant could not escape through the inner liner in the control but was unhindered in test piece no. 2 due to the removal of the thermoformable film.

Accordingly, there is provided a pneumatic tire 10 that has an ability to seal against various puncturing objects and can eliminate or reduce inner liner blister formation in the tire 10.

## Claims

1. A method of preparing a pneumatic tire, the method comprising:
positioning a removable barrier layer (24) defining a thermoformable film of polymeric material on a tire-building apparatus (30);
positioning a precursor sealant layer (23) that is self-supporting directly on the removable barrier layer (24);
forming an unvulcanized tire assembly (14, 16, 20) on the sealant layer (23); and
vulcanizing the unvulcanized tire assembly under conditions of heat and pressure; wherein the precursor sealant layer (23) provides the pneumatic tire (10) with a built-in sealant layer with self-sealing properties and the removable barrier layer is readily removable to expose the built-in sealant layer.

2. The method of claim 1 further comprising removing the removable barrier layer (24) from the pneumatic tire (10) to expose the built-in sealant layer.

3. The method of claim 1 or 2 wherein the removable barrier layer (24) includes an end defining a pull-tab such that removing the removable barrier comprises pulling the pull-tab to remove the removable barrier (24) layer from the pneumatic tire (10) to expose the built-in sealant layer.

4. The method of at least one of the previous claims wherein the removable barrier layer (24) defines a thermoformable film of nylon or a blend of nylon and rubber.

5. The method of at least one of the previous claims wherein the precursor sealant (23) layer comprises an uncured butyl rubber-based rubber composition.

6. The method of at least one of the previous claims wherein the sealant layer (23) comprises a polyurethane based composition.

7. The method of at least one of the previous claims, further comprising positioning a rubber inner liner directly on the barrier layer (23) defining the thermoformable film of polymeric material followed by a tire carcass (16) and a rubber tire tread (20) on the tire carcass to define the unvulcanized tire assembly.

8. A pneumatic tire with built-in sealant layer, the tire comprising an outer circumferential rubber tread (14), a supporting carcass (16) therefor, a rubber inner liner (20) disposed inwardly from the supporting carcass (16), an innermost removable barrier layer (24), and a built-in sealant layer (23), which is self-supporting, adjacent the innermost barrier layer (24) and disposed inwardly from the rubber inner liner (20), wherein the removable barrier layer is readily removable to expose the built-in sealant layer and the sealant layer (23) provides self-sealing properties to the pneumatic tire (10).

9. The tire of claim 8 wherein the removable barrier layer (24) defines a thermoformable film of polymeric material.

10. The tire of claim 8 wherein the removable barrier layer (24) defines a thermoformable film of nylon or a blend of nylon and rubber.

11. The tire of at least one of the previous claims 9-10 wherein the sealant layer (23) comprises a butyl rubber-based rubber composition.

12. The tire of at least one of the previous claims 9-11 wherein the sealant layer (23) comprises a polyurethane based composition.

13. The tire of at least one of the previous claims 9-12 wherein the inner liner (20) is positioned directly on the sealant layer (23).

## Patentansprüche

1. Verfahren zur Herstellung eines Luftreifens, wobei das Verfahren umfasst:
Positionieren einer entfernbaren Barriereschicht (24), die eine thermoformbare Folie aus Polymermaterial definiert, auf einer Reifenbauvorrichtung (30);
Positionieren einer Vorläufer-Abdichtungsschicht (23), die selbsttragend ist, direkt auf der entfernbaren Barriereschicht (24);
Formen einer unvulkanisierten Reifenanordnung (14, 16, 20) auf der Abdichtungsschicht (23); und
Vulkanisieren der unvulkanisierten Reifenanordnung unter Wärme- und Druckbedingungen; wobei die Vorläufer-Abdichtungsschicht (23) den Luftreifen (10) mit einer eingebauten Abdichtungsschicht mit Selbstdichtungseigenschaften versieht und die entfernbare Barriereschicht leicht entfernt werden kann, um die eingebaute Abdichtungsschicht freizulegen.

2. Verfahren nach Anspruch 1, weiter umfassend das Entfernen der entfernbaren Barriereschicht (24) von dem Luftreifen (10), um die eingebaute Abdichtungsschicht freizulegen.

3. Verfahren nach Anspruch 1 oder 2, wobei die entfernbare Barriereschicht (24) ein Ende umfasst, das eine Zuglasche definiert, sodass das Entfernen der entfernbaren Barriere das Ziehen an der Zuglasche umfasst, um die entfernbare Barriereschicht (24) von dem Luftreifen (10) abzuziehen, um die eingebaute Abdichtungsschicht freizulegen.

4. Verfahren nach mindestens einem der vorgenannten Ansprüche, wobei die entfernbare Barriereschicht (24) eine thermoformbare Folie aus Nylon oder einem Gemisch von Nylon und Kautschuk definiert.

5. Verfahren nach mindestens einem der vorgenannten Ansprüche, wobei die Vorläufer-Abdichtungsschicht (23) eine Kautschukzusammensetzung auf Basis von unvulkanisiertem Butylkautschuk umfasst.

6. Verfahren nach mindestens einem der vorgenannten Ansprüche, wobei die Abdichtungsschicht (23) eine Zusammensetzung auf Basis von Polyurethan umfasst.

7. Verfahren nach mindestens einem der vorgenannten Ansprüche, umfassend weiter das Positionieren einer Kautschuk-Innenisolierung direkt auf der Barriereschicht (23), die die thermoformbare Folie aus Polymermaterial definiert, gefolgt von einer Reifenkarkasse (16) und einer Kautschuk-Reifenlauffläche (20) auf der Reifenkarkasse, um die unvulkanisierte Reifenanordnung zu definieren.

8. Luftreifen mit eingebauter Abdichtungsschicht, wobei der Reifen eine äußere umfangsgerichtete Kautschuklauffläche (14), eine tragende Karkasse (16) dafür, eine einwärts von der tragenden Karkasse (16) angeordnete Kautschuk-Innenisolierung (20), eine innerste entfernbare Barriereschicht (24) und eine eingebaute Abdichtungsschicht (23), die selbsttragend ist, benachbart zu der innersten Barriereschicht (24) und einwärts von der Kautschuk-Innenisolierung (20) angeordnet umfasst, wobei die entfernbare Barriereschicht leicht entfernt werden kann, um die eingebaute Abdichtungsschicht freizulegen, und die Abdichtungsschicht (23) den Luftreifen (10) mit Selbstdichtungseigenschaften versieht.

9. Reifen nach Anspruch 8, wobei die entfernbare Barriereschicht (24) eine thermoformbare Folie aus Polymermaterial definiert.

10. Reifen nach Anspruch 8, wobei die entfernbare Barriereschicht (24) eine thermoformbare Folie aus Nylon oder einem Gemisch von Nylon und Kautschuk definiert.

11. Reifen nach mindestens einem der vorgenannten Ansprüche 9-10, wobei die Abdichtungsschicht (23) eine Kautschukzusammensetzung auf Basis von Butylkautschuk umfasst.

12. Reifen nach mindestens einem der vorgenannten Ansprüche 9-11, wobei die Abdichtungsschicht (23) eine Zusammensetzung auf Basis von Polyurethan umfasst.

13. Reifen nach mindestens einem der vorgenannten Ansprüche 9-12, wobei die Innenisolierung (20) direkt auf der Abdichtungsschicht (23) positioniert ist.

## Revendications

1. Procédé de préparation d'un bandage pneumatique, le procédé comprenant le fait de :
positionner une couche amovible (24) faisant office de barrière définissant un film thermoformable d'une matière polymère sur un appareil (30) de confection de bandage pneumatique ;
positionner une couche d'étanchéité (23) faisant office de précurseur, qui est autoportante, directement sur la couche amovible (24) faisant office de barrière ;
former un assemblage de bandage pneumatique non vulcanisé (14, 16, 20) sur la couche d'étanchéité (23) ; et
vulcaniser l'assemblage de bandage pneumatique non vulcanisé dans des conditions de chaleur et de pression, la couche d'étanchéité (23) faisant office de précurseur conférant au bandage pneumatique (10) une couche d'étanchéité intégrée possédant des propriétés d'étanchéisation automatique et la couche amovible faisant office de barrière pouvant être aisément retirée pour exposer la couche d'étanchéité intégrée.

2. Procédé selon la revendication 1, comprenant en outre le fait de retirer du bandage pneumatique (10) la couche amovible (24) faisant office de barrière afin d'exposer la couche d'étanchéité intégrée.

3. Procédé selon la revendication 1 ou 2, dans lequel la couche amovible (24) faisant office de barrière englobe une extrémité définissant une patte de traction, de telle sorte que le retrait de la couche amovible faisant office de barrière comprend le fait de tirer la patte de traction pour retirer du bandage pneumatique (10) la couche amovible (24) faisant office de barrière afin d'exposer la couche d'étanchéité intégrée.

4. Procédé selon au moins une des revendications précédentes, dans lequel la couche amovible (24) faisant office de barrière définit un film thermoformable en nylon ou bien un mélange de nylon et de caoutchouc.

5. Procédé selon au moins une des revendications précédentes, dans lequel la couche d'étanchéité (23) faisant office de précurseur comprend une composition de caoutchouc non vulcanisé à base de caoutchouc butyle.

6. Procédé selon au moins une des revendications précédentes, dans lequel la couche d'étanchéité (23) faisant office de précurseur comprend une composition à base de polyuréthane.

7. Procédé selon au moins une des revendications précédentes, comprenant en outre le positionnement d'un calandrage intérieur en caoutchouc directement sur la couche (23) faisant office de barrière définissant le film thermoformable d'une matière polymère, suivi d'une carcasse de bandage pneumatique (16) et d'une bande de roulement de bandage pneumatique en caoutchouc (20) sur la carcasse de bandage pneumatique pour définir l'assemblage de bandage pneumatique non vulcanisé.

8. Bandage pneumatique comprenant une couche d'étanchéité intégrée, le bandage pneumatique comprenant une bande de roulement circonférentielle externe (14) en caoutchouc, une carcasse de support (16) pour la dernière citée, un calandrage intérieur en caoutchouc (20) disposé à l'intérieur de la carcasse de support (16), une couche amovible la plus interne (24) faisant office de barrière, et une couche d'étanchéité intégrée (23), qui est autoportante, en position adjacente à la couche la plus interne (24) faisant office de barrière et qui est disposée à l'intérieur du calandrage intérieur (20) en caoutchouc, la couche amovible faisant office de barrière pouvant être aisément retirée pour exposer la couche d'étanchéité intégrée, et la couche d'étanchéité (23) conférant des propriétés d'étanchéisation automatique au bandage pneumatique (10).

9. Bandage pneumatique selon la revendication 8, dans lequel la couche amovible (24) faisant office de barrière définit un film thermoformable d'une matière polymère.

10. Bandage pneumatique selon la revendication 8, dans lequel la couche amovible (24) faisant office de barrière définit un film thermoformable en nylon ou constitué d'un mélange de nylon et de caoutchouc.

11. Bandage pneumatique selon au moins une des revendications précédentes 9 à 10, dans lequel la couche d'étanchéité (23) comprend une composition de caoutchouc à base de caoutchouc butyle.

12. Bandage pneumatique selon au moins une des revendications précédentes 9 à 11, dans lequel la couche d'étanchéité (23) comprend une composition à base de polyuréthane.

13. Bandage pneumatique selon au moins une des revendications précédentes 9 à 12, dans lequel le calandrage intérieur (20) est positionné directement sur la couche d'étanchéité (23).
